Europäisches Patentamt

European Patent Office

Office européen des brevets

(11) Publication number: **0 191 597**
**B1**

# EUROPEAN PATENT SPECIFICATION

(45) Date of publication of patent specification: **31.01.90**

(21) Application number: **86300778.7**

(22) Date of filing: **05.02.86**

(51) Int. Cl.⁵: **F 16 D 65/02,** F 16 D 55/00, C 23 C 4/10

(54) Disk brake devices.

(30) Priority: 06.02.85 JP 15478/85 u
27.11.85 JP 266722/85
27.11.85 JP 266723/85
27.11.85 JP 266724/85
27.11.85 JP 266725/85
27.11.85 JP 266726/85
27.11.85 JP 266727/85
27.11.85 JP 266728/85
27.11.85 JP 266729/85
27.11.85 JP 266730/85

(43) Date of publication of application:
20.08.86 Bulletin 86/34

(45) Publication of the grant of the patent:
31.01.90 Bulletin 90/05

(84) Designated Contracting States:
DE FR GB IT

(56) References cited:
FR-A-2 398 232
GB-A-2 021 219
GB-A-2 049 484
GB-A-2 060 093
GB-A-2 089 914
US-A-3 563 347
US-A-4 373 615

(73) Proprietor: **HONDA GIKEN KOGYO KABUSHIKI KAISHA**
1-go, 1-ban, Minami-Aoyama 2-chome
Minato-ku Tokyo 107 (JP)

(72) Inventor: **Kuroda, Masataka** c/o Kabushiki Kaisha
Honda Gijutsu Kenkyusho, No. 4-1, Chuo 1-chome
Wako-shi, Saitama-ken (JP)
Inventor: **Ishikawa, Yoshimi** c/o Kabushiki Kaisha
Honda Gijutsu Kenkyusho, No. 4-1, Chuo 1-chome
Wako-shi, Saitama-ken (JP)
Inventor: **Mikuni, Junji** c/o Kabushiki Honda Gijutsu Kenkyusho, No. 4-1, Chuo 1-chome
Wako-shi, Saitama-ken (JP)
Inventor: **Nagata, Makoto** c/o Kabushiki Honda Gijutsu Kenkyusho, No. 4-1, Chuo 1-chome
Wako-shi, Saitama-ken (JP)
Inventor: **Fujisaki, Masaru** c/o Kabushiki Kaisha Honda Gijutsu Kenkyusho, No. 4-1, Chuo 1-chome
Wako-shi, Saitama-ken (JP)
Inventor: **Oka, Tomoo** c/o Kabushiki Kaisha Honda Gijutsu Kenkyusho, No. 4-1, Chuo 1-chome
Wako-shi, Saitama-ken (JP)

Courier Press, Leamington Spa, England.

**EP 0 191 597 B1**

(74) Representative: **Cockbain, Julian Roderick
Michaelson et al
Frank B. Dehn & Co. European Patent Attorneys
Imperial House 15-19, Kingsway
London WC2B 6UZ (GB)**

## Description

The present invention relates to a disk brake device used with brake assemblies for vehicles and, more particularly, to such a brake device in which a heat-insulating means is applied to a brake pad or an engaging member for giving a push to said pad.

The known brake assemblies for vehicles, etc. include a disk brake device comprising a pair of brake pads disposed on both sides of a brake disc rotatable with a wheel and a caliper body having an engaging member for urging said brake pads into engagement with said disk, as disclosed in, e.g., GB-A-2060093.

The brake pads used with such a disk brake device are each of the structure wherein a friction pad formed of, e.g., a copper based sintered alloy is made with an integral metallic backing plate. In this structure, the metal backing plate is pushed by a metal piston thereby to cause the friction pad of the brake pad to come into engagement with the brake disk. There is therefore a danger that heat generated between the friction pad and the brake disk during braking may be transmitted from the backing plate to brake fluid in the brake cylinder in the caliper body through the piston or caliper body. To avoid this, in the prior art there has been used an arrangement wherein an insulator formed of a metal having a low thermal conductivity such as, for instance, stainless steel, is attached to the back surface, i.e. the surface facing the piston, of the backing plate, as disclosed in US-A-3563347. FR-A-2398232 discloses a disc brake device in which the piston engaging the back surface of the backing plate is provided with a boot comprising a metal layer adjacent the piston and a ceramic or other thermally insulating layer adjacent the backing plate. Moreover US-A-4373615 discloses a disk brake device in which the backing plate has a laminate structure, one of the internal laminate being a ceramic thermal barrier layer. However, these arrangements require the insulator to be attached to the brake pad or to the piston or require the construction of a complex laminated backing plate and can result in an increase in the number of parts required for and in the number of the steps involved in the assembly of the disk brake device.

It is therefore an object of the invention to provide a disk brake device in which an improved heat insulating means is provided as a coated layer between a brake pad and the engaging member for urging the pad into engagement with the brake disk.

The use of a mixture of zirconia and yttria (a sintering aid) as a ceramic coating material for metal substrates such as turbine airfoils which have to withstand high temperature conditions is known from GB-A-2049484.

However we have now found that the object of the invention may be met and an improved disk brake device provided if the coated layer is produced by flame spraying a ceramic material containing zirconia, titanium dioxide and a sintering aid and by impregnating the coated layer with a heat resistant material. The resulting layer has excellent heat insulation properties, is capable of being resistant to thermal shock and shows satisfactory adhesiveness with respect to metallic substrates, and thus the coated layers are excellent in heat insulation and workability. Indeed with the use of such material it is possible to reduce the thickness of the heat insulating layer required for heat insulation and thus also reduce the span and weight of the caliper body.

According to one aspect of the present invention we therefore provide a disk brake device comprising a brake disk rotatable with a wheel, a pair of brake pads arranged one on each side of said brake disk, and a caliper body having an engaging member for urging said brake pads into engagement with said disk, at least one of the opposed surfaces of said brake pads and said engaging member is provided with a ceramic heat insulating coating layer characterized in that said layer is formed by flame spraying of a zirconia based ceramics material comprising zirconia, titanium dioxide and a sintering aid and in that said coating layer is impregnated with at least one material selected from heat-resistant organic materials and heat resistant inorganic materials.

The coating layer is formed by flame spraying, for example by plasma spraying, and may be formed on the engaging surface of the engaging member, on the back surface of the brake pad which engages with the engaging member, e.g. on the surface of the backing plate of the brake pad, or coating layers may be formed on the engaging member and on the brake pad.

According to a further aspect of the invention we also provide a brake pad for a disk brake device, provided on the surface remote from the friction surface thereof with a ceramic heat insulating coating layer characterized in that said layer is formed by flame spraying of a zirconia based ceramics material comprising zirconia, titanium dioxide and a sintering aid and in that said coating layer is impregnated with at least one material selected from heat-resistant organic materials and heat-resistant inorganic materials.

Preferred embodiments of the device and pads of the invention will now be described by way of example and with reference to the accompanying drawings, in which:-

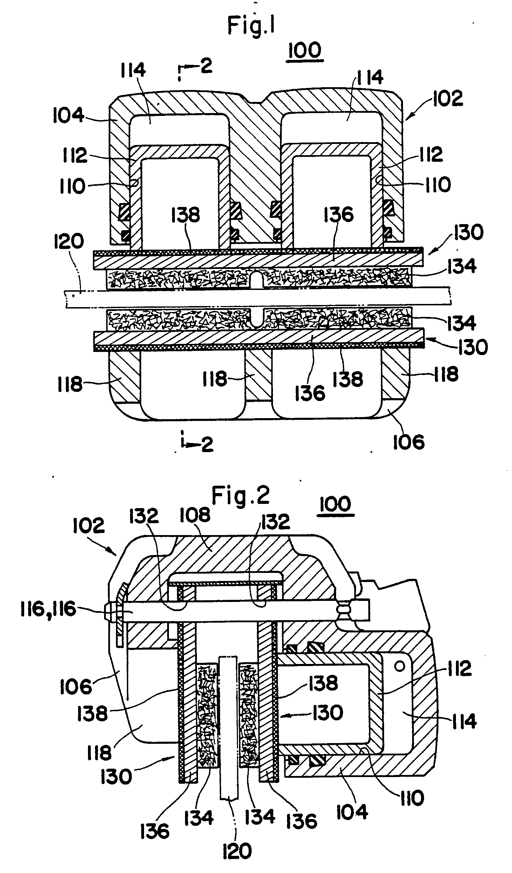

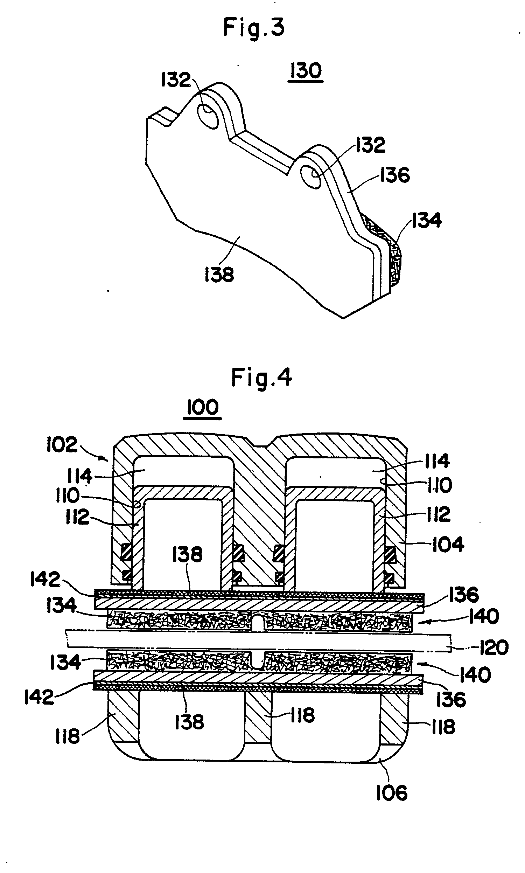

Figures 1 to 3 show one embodiment of the disk brake device and brake pad of the invention wherein a coating layer of a zirconia based ceramics material is applied on a backing plate of a brake pad, Fig. 1 being a sectioned plan view showing the disk brake device, Fig. 2 being a sectional view taken along the line 2-2 of Fig. 1, and Fig 3 being a perspective view showing the brake pad;

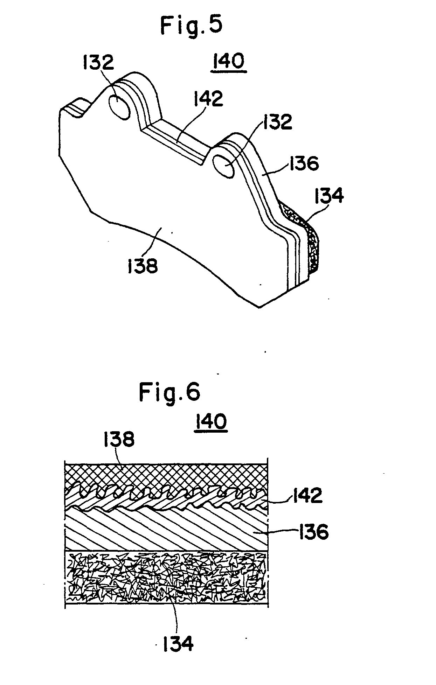

Figures 4 to 6 show another embodiment of the disk brake device and brake pad of the present invention wherein a coating layer of a zirconia based ceramics material is applied on a backing plate of a brake pad, Fig. 4 being a sectioned plan view illustrating the disk brake device, Fig. 5 being a perspective view illustrating the brake pad, and Fig. 6 being a partly enlarged sectional view of the brake pad;

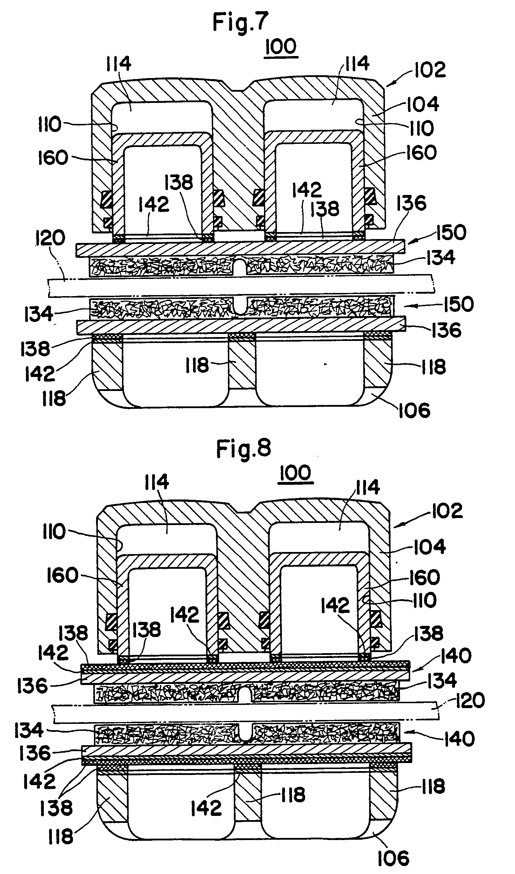

Figure 7 is a sectioned plan view of a disk brake device showing a further embodiment of the present invention wherein coating layers of a zirconia based ceramics material are applied on an extreme end of a piston (a brake pad engaging member) and on the engaging hook (also a brake pad engaging member) of the counter-operating portion of the caliper body;

Figure 8 is a sectioned plan view of a disk brake device showing a still further embodiment of the present invention wherein coating layers of a zirconia based ceramics material are applied on a backing plate of a brake pad, an extreme end of a piston forming a brake pad engaging member, and on an engaging hook of the counter-operating portion of the caliper body;

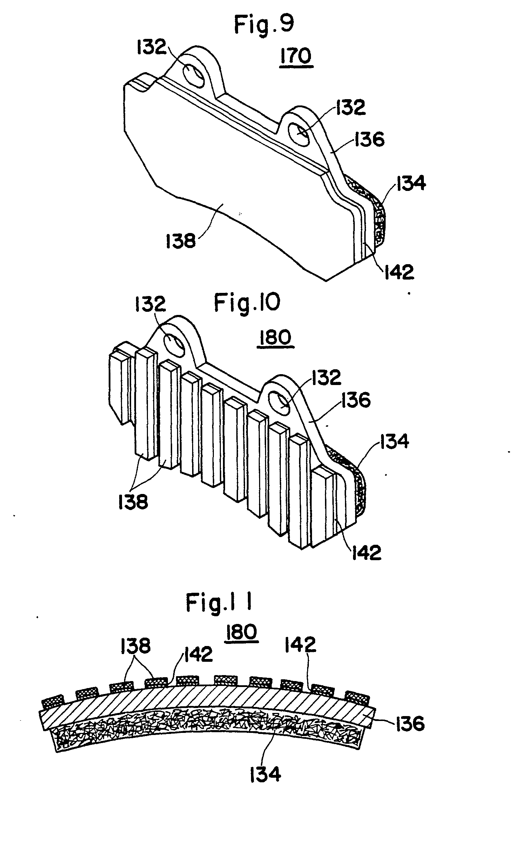

Figure 9 is a perspective view of a brake pad showing a still further embodiment of the present invention wherein a coating layer of zirconia based ceramics material is applied on a portion of the backing plate of a brake pad, but not about the circumferences of the hanger pin-inserting holes of the brake pad;

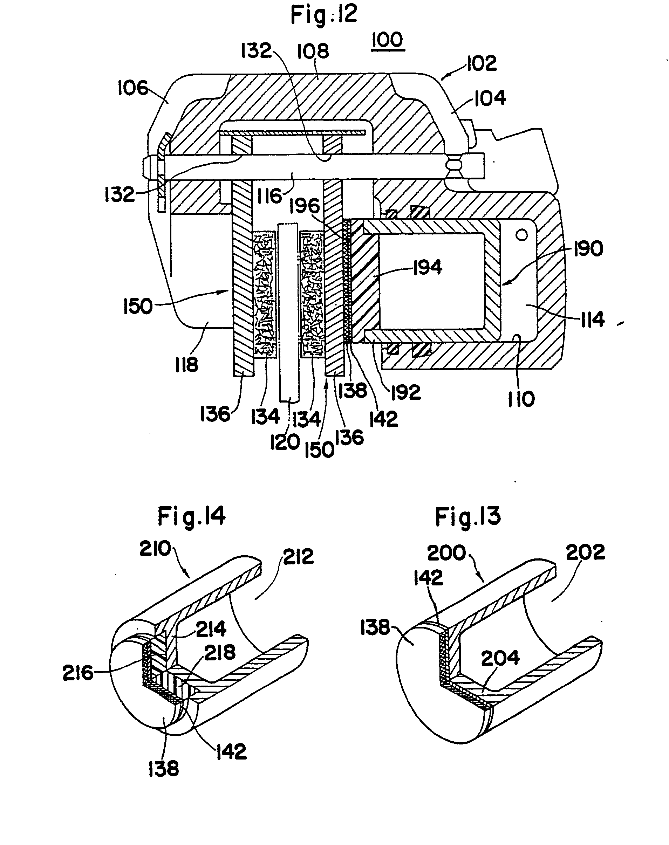

Figures 12 to 14 show a still further embodiment of the present invention wherein the face of a piston, which engages a brake pad, is closed and is provided with a coating layer of a zirconia based ceramics material, Fig. 12 being a sectioned plan view of a disk brake device showing one modification, Fig. 13 being a partly cut-away perspective view of the piston showing another modification, and Fig. 14 being a partly cut-away sectional view of the piston showing a further modification.

In the embodiment shown in Figures 1 to 3, a coating layer 138 of a zirconia based ceramics material is provided on the backing plate 136 of a brake pad 130 over a surface facing a piston 112. In Figures 1 and 2, the disk brake device is generally shown at 100, including a caliper body 102 and a pair of brake pads 130 one disposed on each side of a brake disk 120 rotatable with a wheel (not shown).

The caliper body 102 comprises an operating portion 104 arranged on one side of the brake disk 120, a counter-operating portion 106 arranged on the other side and a bridge portion 108 for making connection therebetween, and is supported on a bracket (not illustrated) mounted to a vehicle body for movement in the axial direction of the disk by means of a sliding pin (not illustrated) and with said bridge portion 108 being positioned over and across the brake disk 120.

The operating portion 104 is provided with a juxtaposed arrangement of brake cylinders 110 each being open on the side of the brake disk 120. Cup-shaped pistons 112 the external ends whereof are open are disposed in brake cylinders 110, the seal between the pistons and the brake cylinders being fluid-tight whereby a hydraulic chamber 114 is defined within each cylinder.

The brake pads 130 are both supported on the caliper body 102 for movement in the disk's axial direction by means of hanger pins 116 inserted through holes 132 formed in the pads. As the pistons 112, which act as brake pad engaging members, are advanced by brake fluid supplied to the hydraulic chambers 114, their extreme ends urge one brake pad 130 to cause it to come into sliding contact with one side of the brake disk 120. The resulting reaction force causes the caliper body 102 to move in the right hand direction in Figure 2, thereby causing engaging hooks 118 of the counter-operating portion 106 (which also act as brake pad engaging members) to urge the other brake pad 130 into sliding contact with the other side of the brake disk 120. In this manner, the brake disk 120 is forcedly clamped between both pads 130 for braking.

The brake pads 130 are each obtained by fixedly attaching a friction pad 134 adapted to come into sliding contact with the brake disk 120 and formed for example of a copper based sintered alloy to the front side of a metal backing plate 136 and applying a zirconia based ceramics material over the rear side of the backing plate, viz. the side facing the piston 112 or the engaging hook 118, by flame spraying to form a coating layer 138.

In another embodiment, shown in Figures 4 to 6, the brake pads 140 have a heat-resistant undercoat 142 applied over the rear side of the backing plate 136 and the coating layer 138 is formed on the surface of the undercoat by flame spraying of said zirconia based ceramics material.

In the present invention, the reasons for using the zirconia ($ZrO_2$) based ceramics material for the coating layer 138 are that it has been found that such a material is stronger in terms of thermal shock resistance than other ceramics materials, has physical properties bearing resemblance to those of a metal, and excels in heat insulation. Thus a coating layer obtained by flame spraying of zirconia based ceramics material has shown a thermal shock limit temperature of 650°C, a thermal conductivity of 0.0022 cal/cm.sec °C(0.92 J/m.s. °C) and a coefficient of thermal expansion of $11 \times 10^{-6}$/°C, whereas a coating layer obtained by flame spraying of, e.g., alumina ($Al_2O_3$) based ceramics material shows a thermal shock limit temperature of 300°C, a thermal conductivity of 0.0126 cal/cm.sec. °C (5.28 J/m.s.°C) and a coefficient of thermal expansion of $7 \times 10^{-6}$/°C. Thus, the latter is poor in thermal shock, and shows a large difference in the coefficient of thermal expansion relative to the substrate material of the piston, the metal backing plate, etc. This means that the zirconia based coating layer used in the present invention is significantly more advantageous than the comparatively exemplified coating layer.

When the zirconia based ceramics material used according to the present invention is applied in the form of a powder having a particle size of 10 to 44 microns (mcm), a particularly satisfactory and uniform coating layer is obtained. To obtain a particularly satisfactory heat insulating effect, the zirconia based coating layer thickness should be from 0.2 to 0.5 mm.

In the ceramics material, the use with zirconia of a sintering aid, such as yttria, or calcium or magnesium oxide, improves the thermal shock resistance of the coating layer; thus the use of powdery zirconia along with 3 to 12% of yttria $(Y_2O_3)$, 3 to 20% of calcium oxide (CaO) or 3 to 20% of magnesia (MgO) (percentages being by weight) provides a coating layer which is significantly improved in thermal shock resistance relative to the layers obtained using zirconia $(ZrO_2)$ powder alone.

The coating layer obtained by flame spraying of the zirconia based ceramics material has a high hardness. Thus, if that layer has a rough surface, there is a fear that the engaging members which come into contact therewith such as, for instance, the piston and the engaging hook, may be worn down. For that reason, the surface roughness of the coating layer is preferably reduced to 25S or less eg. by polishing, thereby reducing the amount of wear on the disk brake device component members coming into contact therewith. (Surface roughness in S may be measured by JIS B 06 01).

Coating layers of a zirconia based ceramics material can be white and porous, and dust or the like may easily be deposited thereon, causing a drop of quality of the resulting product. However, the titanium dioxide $(TiO_2)$ component, which preferably is added to the zirconia based ceramics material in an amount of 2 to 3%, undergoes a chemical change with hydrogen $(H_2)$, nitrogen $(N_2)$ or the like in a reducing gas atmosphere during flame spraying, so that a black ceramics material coating layer is formed which ensures that any externally deposited dust, etc. has no appreciably adverse influence upon the appearance of the coating layer, so that it is of high quality and has a satisfactory radiation due to its colour tone.

It is noted that an increase in the degree of blackness may be achieved by an increase in the concentration of hydrogen or nitrogen in the reducing gas used.

Further, due to the fact that the coating layer as obtained by flame spraying of the ceramics material is porous, there is a possibility that rusting may occur between it and the mother material of the backing plate, etc., by external entering of moisture, etc. However, by impregnating the coating layer with a heat-resistant organic material (for example a material based on epoxy or silicone varnish) or a heat-resistant inorganic material (for example such as water glass) the pores of the coating layer are closed up, thus preventing external entering of moisture and resulting in improvements in the rust-proofing effect. Closing-up of the pores makes the deposition of contaminants such as dust difficult, thus resulting in an increase in the quality of the product to be obtained.

In accordance with the present invention, it is noted that the heat-resistant organic or inorganic materials may be added alone or in combination.

In another embodiment, as shown in Figures 4 to 6, an undercoat 142 is applied to the backing plate 136 before the zirconia based coating layer 138 so as to increase further the adhesiveness of the coating layer 138 with respect to the substrate material.

Referring more specifically to Figure 6, the rear surface of the backing plate 136 is roughened by shot blasting, followed by plasma spraying of a heat-resistant metallic material having a powder particle size of 10 to 44 mcm and a relatively low coefficient of thermal expansion such as that based on stainless steel, molybdenum or nickelchromium capable of standing up to a temperature of, for instance, about 500°C to form the undercoat 142 having a thickness of 0.02 to 0.1 mm. That undercoat is then roughened on the surface, and the coating layer 138 is formed thereon by plasma spraying of the zirconia based ceramics material.

In this manner, the mother material is firmly bonded to the undercoat 142 of the heat-resistant metal, and the coating layer 138 of the zirconia based ceramics material is firmly bonded to the surface of that undercoat 142. This arrangement is much more strongly adhered than that wherein the zirconia based ceramics material is directly bonded to the mother material. Also; rusting on the mother material is prevented from occurring since any moisture, which may otherwise enter from the pores of the coating layer 138, is blocked by the undercoat 142.

A further embodiment of the present invention will now be explained.

In the embodiment as shown in Figure 7, an engaging member for engagement with a brake pad 150 has applied thereon a coating layer of a zirconia based ceramics material. More specifically, undercoats 142 made of a heat-resistant metallic material, as in the case of the foregoing embodiments, are each applied to the extreme end surfaces of pistons 60, which act as brake pad engaging members, which piston surfaces are in facing arrangement with the backing plate of one brake pad 150 and to the extreme end surfaces of engaging hooks 118 which act as brake pad engaging members in the counter operating portion 106 of the caliper body 102, which engaging hook surfaces are in facing arrangement with the backing plate 136 of the other brake pad 150. As is the case with the foregoing embodiments, coating layers 138 of a zirconia based ceramics material are coated onto the undercoated surfaces.

In the modification of this embodiment shown in Figure 8, backing plates 136 on both brake pads 140 are also provided with undercoats 142 and zirconia based ceramics material coating layers 138.

In another modification shown in Figure 9, the undercoat 142 and coating layer 138 are provided on the rear surface of the backing plate 136 of a brake pad 170 except on regions of the rear surface about the circumferences of the brake pad mounting means apertures, the hanger pin-inserting holes 132.

When the ceramics coating layer is applied over the entire rear surface of the backing plate 136, wearing, cracking or peeling-off of the coating layer is easy to occur, since, in the non-braking state, the hanger pins strike upon the ceramics coating layer at the pin-inserting holes due to the engine and running vibrations. As contemplated in the modification as mentioned just above, the absence of any ceramics coating layer about the circumferences of the hanger pin-inserting holes 132 makes a contribution to eliminating any influence upon the ceramics coating layer 138 secured to the backing plate 136.

In a further embodiment as shown in Figures 10 and 11, the rear surface of the backing plate 136 of a brake pad 180 is provided with, at a plurality of spaced locations, rectangular strips of undercoat 142 coated with zirconia based ceramics material coating layers 138.

In this way it is possible more effectively to prevent cracking or peeling-off of the coating layers 138 by providing them in strips spaced apart at given intervals as even when the brake pad 180 is engaged or disengaged with or from the brake disk by the piston and is subjected to repeated bending, as shown in Figure 11, the coating layers are able to follow the amount of bending of the backing plate 136.

In still further embodiments as shown in Figures 12 to 14, the surface of a piston in facing relation to a backing plate 136 of a brake pad 150 is closed and has applied thereon a coating layer 138 of a zirconia based ceramics material. In Figure 12, a cap 194 is fitted over an open extreme end 192 of a piston 190. The cap 194 is then provided on the front face 196 with an undercoat 142 of a heat-resistant metallic material, on which a coating layer 138 of the zirconia based ceramics material is applied.

In Figure 13, a piston 200 is shown which is inserted into a brake cylinder with its open portion 202 being directed to the hydraulic chamber. An undercoat 142 is provided on the front face of the closed end surface 204 and a coating layer 138 of a zirconia based ceramics material is further provided thereon.

In Figure 14, a piston 210 is shown which is inserted into a brake cylinder with its open portion 212 being directed to the hydraulic chamber. A recess 216 is formed in the front face of the closed piston end 214, and a cap 218 formed of, e.g., a heat-resistant material having a low coefficient of thermal expansion is fixed into this recess. The cap is provided on its front face with an undercoat 142 on which a coating layer 138 of a zirconia based ceramics material is applied.

The use of pistons having their extreme ends closed, such as the pistons just mentioned, results in an increase in the surface area of the piston which engages with the brake pad and in the pressure acting upon the brake pad being dispersed over a greater area.

It should be understood that while the coating layer 138 of the zirconia based ceramics material is shown in each of the embodiments shown in Figures 7 to 14 as being provided only indirectly on the mother material of the relevant component (brake pad, piston, piston end cap, etc) by virtue of the presence of the undercoat, the coating layer 138 of course if desired may be applied directly to the mother material.

While each of the foregoing embodiments has been described with reference to a disk brake device having a caliper body in which the piston is disposed on one side of the brake disk, the present invention may be applicable to a disk brake device of the caliper body type in which pistons are disposed on both sides of a brake disk in opposite relation. Furthermore, the present invention is of course not exclusively limited to the use of brake pads which are supported by hanger pins.

**Claims**

1. A disk brake device (100) comprising a brake disk (120) rotatable with a wheel, a pair of brake pads (130) arranged one on each side of said brake disk, and a caliper body (102) having an engaging member (112, 118) for urging said brake pads into engagement with said disk, at least one of the opposed surfaces of said brake pads and said engaging member is provided with a ceramic heat insulating coating layer (138) characterized in that said layer is formed by flame spraying of a zirconia based ceramics material comprising zirconia, titanium dioxide and a sintering aid and in that said coating layer (138) is impregnated with at least one material selected from heat-resistant organic materials and heat-resistant inorganic materials.

2. A device as claimed in claim 1 wherein said coating layer (138) is formed by flame spraying a said ceramics material containing as said sintering aid 3 to 12% by weight of yttria, 3 to 20% by weight of calcium oxide or 3 to 20% by weight of magnesia, the percentages by weight being relative to the weight of the zirconia.

3. A device as claimed in either one of claims 1 and 2 wherein said coating layer (138) has a thickness of 0.2 to 0.5mm and is formed by flame spraying zirconia based ceramics material powder having a powder particle size of 10 to 40 mcm.

4. A device as claimed in any one of claims 1 to 3 wherein said coating layer (138) has a surface roughness of 25S or less.

5. A device as claimed in any one of claims 1 to 4 wherein said coating layer (138) is formed by flame spraying a said zirconia based ceramics material containing 2 to 3% by weight titanium dioxide relative to the weight of the remaining components of said ceramics material.

6. A device as claimed in any one of claims 1 to 5 wherein said coating layer (138) is impregnated with at least one said heat-resistant material selected from epoxy and silicone varnishes and water glass.

7. A device as claimed in any one of claims 1 to 6 wherein said coating layer (138) is formed on a flame sprayed heat-resistant undercoat layer (142).

8. A device as claimed in any one of claims 1 to 7 wherein said brake pads (130) have backing plates (136) remote from said brake disk (120) and wherein a surface of a said backing plate in facing relation with a said engaging member (112, 118) has formed thereon a said coating layer (138).

9. A device as claimed in claim 8 wherein said brake pads (130) are provided with apertures (132) for mounting means and wherein a said coating layer (138) is formed over said surface of said backing plates (136) except in the vicinity of said apertures.

10. A device as claimed in either of claims 8 and 9 wherein said coating layer (138) is provided on a said surface of a said backing plate (136) at a plurality of spaced locations.

11. A device as claimed in any one of claims 1 to 10 wherein a said coating layer (138) is provided on the surface of a said engaging member (160, 118) which is in facing relation with a said brake pad (150 figures 7 and 8).

12. A device as claimed in claim 11 wherein a piston (190) having a closed face in facing relation with the backing plate (136) of a said brake pad (150) has provided on said closed face a said coating layer (138 figure 12).

13. A brake pad (130) for a disk brake device, provided on the surface remote from the friction surface thereof with a ceramic heat insulating coating layer (138) characterized in that said layer is formed by flame spraying of a zirconia based ceramics material comprising zirconia, titanium dioxide and a sintering aid and in that said coating layer (138) is impregnated with at least one material selected from heat-resistant organic materials and heat-resistant inorganic materials.

14. A brake pad as claimed in claim 13 wherein said coating layer (138) is formed by flame spraying a said ceramics material containing as said sintering aid 3 to 12% by weight of yttria, 3 to 20% by weight of calcium oxide or 3 to 20% by weight of magnesia, the percentages by weight being relative to the weight of the zirconia.

15. A brake pad as claimed in either one of claims 13 and 14 wherein said coating layer (138) is formed by flame spraying a said zirconia based ceramics material containing 2 to 3% by weight titanium dioxide relative to the weight of the remaining components of said ceramics material.

16. A brake pad as claimed in any one of claims 13 to 15 wherein said coating layer (138) is impregnated with at least one said heat-resistant material selected from epoxy and silicone varnishes and water glass.

**Patentansprüche**

1. Scheibenbremsvorrichtung (100) aufweisend eine mit einem Rad drehbare Bremsscheibe (120), ein Paar von Bremsklötzen (130), die auf jeder Seite der Bremsscheibe angeordnet sind, und einen Greiftasterkörper (102), der ein Eingriffselement (112, 118) zum Drücken der Bremsklötze in Eingriff mit der Scheibe aufweist, wenigstens eine der gegenüberliegenden Flächen der Bremsklötze und das Eingriffselement mit einer keramischen wärmeisolierenden Beschichtungslage (138) versehen ist, dadurch gekennzeichnet, daß die Lage durch Flammspritzen eines auf Zirkonoxid basierenden Keramikmaterials, aufweisend Zirkonoxid, Titandioxid und eine Sinterhilfe, gebildet ist und daß die Beschichtungslage (138) mit wenigstens einem Material getränkt ist, das aus wärmebeständigen organischen Materialen und wärmebeständigen anorganischen Materialien ausgewählt ist.

2. Vorrichtung nach Anspruch I, bei der die Beschichtungslage (138) durch Flammspritzen eines Keramikmaterials gebildet ist, das als Sinterhilfe 3 bis 12 Gewichts% Yttriumoxid, 3 bis 20 Gewichts% Kalziumoxid oder 3 bis 20 Gewichts% Magnesiumoxid enthält, wobei die Gewichtsprozentsätze sich auf das Gewicht des Zirkonoxids beziehen.

3. Vorrichtung nach dem einen der Ansprüche 1 und 2, bei der die Beschichtungslage (138) eine Dicke von 0,2 bis 0,5 mm aufweist und durch Flammspritzen von auf Zirkonoxid basierendem Keramikmaterialpulver gebildet ist, das eine Pulverpartikelgröße von 10 bis 40 mcm aufweist.

4. Vorrichtung nach einem beliebigen der Ansprüche 1 bis 3, bei der die Beschichtungslage (138) eine Oberflächenrauhigkeit von 25S oder weniger aufweist.

5. Vorrichtung nach einem beliebigen der Ansprüche 1 bis 4, bei der die Beschichtungslage (138) durch Flmmspritzen eines auf Zirkonoxid basierenden Keramikmaterials gebildet ist, das zwei bis drei Gewichts% Titandioxid bezogen auf das Gewicht der verbleibenden Bestandteile des Keramikmaterials enthält.

6. Vorrichtung nach einem beliebigen der Ansprüche 1 bis 5, bei der die Beschichtungslage (138) mit wenigstens einem solchen wärmebeständigen Material getränkt ist, ausgewählt aus Epoxid- und Silikonlacken und Wasserglas.

7. Vorrichtung nach einem beliebigen der Ansprüche 1 bis 6, bei der die Beschichtungslage (138) auf einer flammengespritzten wärmebeständigen Unterschichtlage (142) gebildet ist.

8. Vorrichtung nach einem beliebigen der AnspPrüche 1 bis 7, bei der die Bremsklötze (130) Spannplatten (136) entfernt von der Bremsscheibe (120) aufweisen und bei der auf einer Fläche einer solchen Spannplatte in gegenüberliegender Beziehung zum Eingriffselement (112, 118) eine solche Beschichtungslage (138) gebildet ist.

9. Vorrichtung nach Anspruch 8, bei er die Bremsklötze (130) mit Öffnungen (132) für Montagemittel versehen sind und bei der eine solche Beschichtungslage (138)· über der Fläche der Spannplatten (136), ausgenommen in der Nähe der Öffnungen, gebildet ist.

10. Vorrichtung nach dem einen der Ansprüche 8 und 9, bei der die Beschichtungslage (138) auf einer solchen Fläche einer solchen Spannplatte (136) bei einher Anzahl von mit Abstand angeordneten Stellen vorgesehen ist.

11. Vorrichtung nach einem beliebigen der Ansprüche 1 bis 10, bei der eine solche Beschichtungslage (138) auf der Fläche eines solchen Eingriffselementes (160, 118) vorgesehen ist, die sich in gegenüberliegender Beziehung zu einem solchen Bremsklotz (150, Figuren 7 und 8) befindet.

12. Vorrichtung nach Anspruch 11, bei der eine solche Beschichtungslage (138, Figur 12) auf der geschlossenen Seite eines Kolbens (190) vorgesehen ist, der eine geschlossene Seite in gegenüberliegender Beziehung zur Spannplatte (136) eines solchen Bremsklotzes (150) aufweist.

13. Bremsklotz (130) für eine Scheibenbremsvorrichtung, vorgesehen auf der Fläche entfernt von deren Reibungsfläche mit einer keramischen wärmeisolierenden Beschichtungslage (138), dadurch gekennzeichnet, daß die Lage durch Flammspritzen eines auf Zirkonoxid basierenden Keramikmaterials gebildet ist, aufweisend Zirkonoxid, Titandioxid und eine Sinterhilfe, und daß die Beschichtungslage (138) mit wenigstens einem Material getränkt ist, ausgewählt aus wärmebeständigen organischen Materialien und wärmebeständigen anorganischen Materialien.

14. Bremsklotz nach Anspruch 13, bei dem die Beschichtungslage (138) durch Flammspritzen eines solchen Keramikmaterials gebildet ist, enthaltend als Sinterhilfe 3 bis 12 Gewichts% Yttriumoxid, 3 bis 20 Gewichts% Kalziumoxid oder 3 bis 20 Gewichts% Magnesiumoxid, wobei die Gewichtsprozentsätze auf das Gewicht des Zirkonoxids bezogen sind.

15. Bremsklotz nach dem einen der Ansprüche 13 und 14, bei dem die Beschichtungslage (138) durch Flammspritzen eines auf Zirkonoxid basierenden Keramikmaterials gebildet ist, enthaltend 2 bis 3 Gewichts% Titandioxid, bezogen auf das Gewicht der verbleibenden Bestandteile des Keramikmaterials.

16. Bremsklotz nach einem beliebigen der Ansprüche 13 bis 15, bei dem die Beschichtungslage (138) mit wenigstens einem solchen wärmebeständigen Material getränkt ist, das aus Expoxid-und Silikonlacken und Wasserglas ausgewählt ist

## Revendications

1. Dispositif de frein à disque (100) comprenant un disque de frein (120) qui tourne avec une roue, une paire de garnitures de frein (130) disposées une de chaque côté de ce disque de frein, et un corps d'étrier (102) muni d'un élément d'attaque (112, 118) destiné à presser ces garnitures de frein en contact avec ce disque, au moins une des surfaces opposées face à face de ces garnitures de frein et élément d'attaque étant munies d'une couche de revêtement céramique isolante thermique (138), caractérisé en ce que cette couche est formée par projection à la flamme d'une matière céramique à base d'oxyde de zirconium qui comprend de l'oxyde de zirconium, du dioxyde de titane et un adjuvant de frittage et en ce que cette couche de revêtement (138) est imprégnée d'au moins une matière choisie parmi les matières organiques résistantes à la chaleur et les matières inorganiques résistantes à la chaleur.

2. Dispositif selon la revendication 1, dans lequel cette couche de revêtement (138) est formée par projection à la flamme d'une matière céramique précitée qui contient, comme adjuvant de frittage, 3 à 12% en poids d'oxyde d'yttrium, 3 à 20% en poids d'oxyde de calcium ou 3 à 20% en poids d'oxyde de magnésium, les pourcentages en poids étant rapportés au poids de l'oxyde de zirconium.

3. Dispositif selon une quelconque des revendications 1 et 2, dans lequel cette couche de revêtement (138) possède une épaisseur de 0,2 à 0,5 mm et est formée par projection à la flamme d'une matière céramique à base d'oxyde de zirconium possédant une dimension de particules de poudre de 10 à 40 μm.

4. Dispositif selon une quelconque des revendications 1 à 3, dans lequel cette couche de revêtement (138) possède une rugosité de surface de 25S ou moins.

5. Dispositif selon une quelconque des revendications 1 à 4, dans lequel cette couche de revêtement (138) est formée par projection à la flamme d'une matière céramique à base d'oxyde de zirconium précitée qui contient 2 à 3% en poids de dioxyde de titane, rapporté au poids des autres constituants de cette matière céramique.

6. Dispositif selon une quelconque des revendications 1 à 5, dans lequel cette couche de revêtement (138) est imprégnée d'au moins une matière résistante à la chaleur précitée, choisie parmi les vernis époxy et de silicone et un verre soluble.

7. Dispositif selon une quelconque des revendications 1 à 6, dans lequel cette couche de revêtement (138) est formée sur une sous-couche résistante à la chaleur (142) elle-même formée par projection à la flamme.

8. Dispositif selon une quelconque des revendications 1 à 7, dans lequel ces garnitures de frein (130) comprennent des plaquettes supports (136) éloignées de ce disque de frein (120), et dans lequel une couche de revêtement (138) est formée sur une surface d'une plaquette support qui fait face à un élément d'attaque (112, 118).

9. Dispositif selon la revendication 8, dans lequel ces garnitures de frein (130) sont munies d'ouvertures (132) destinées à recevoir des moyens de montage, et dans lequel une couche de revêtement (138) est formée sur cette surface de ces plaquettes support (136), sauf dans le voisinage des ouvertures en question.

10. Dispositif selon une quelconque des revendications 8 et 9, dans lequel cette couche de revêtement (138) est prévue sur une surface d'une plaquette support (136) en plusieurs emplacements espacés.

11. Dispositif selon une quelconque des revendications 1 à 10, dans lequel une couche de revêtement (138) est prévue sur la surface d'un élément d'attaque (160, 118) qui fait face à une garniture de frein (150, Fig. 7 et 8).

12. Dispositif selon la revendication 11, dans lequel un piston (190) possédant une face fermée qui fait face à la plaquette support (136) de cette garniture de frein (150) est muni sur cette face fermée d'une couche de revêtement (138, Fig. 12).

13. Garnitures de frein (130) pour un dispositif de frein à disque, munie sur sa surface qui est la plus éloignée de sa surface de friction d'une couche de revêtement céramique isolante thermique (138), caractérisée en ce que cette couche est formée par projection à la flamme d'une matière céramique à base d'oxyde de zirconium qui comprend de l'oxyde de zirconium, du dioxyde de titane et un adjuvant de frittage et en ce que cette couche de revêtement (138) est imprégnée d'au moins une matière choisie parmi les matières organiques résistantes à la chaleur et les matières inorganiques résistantes à la chaleur.

14. Garniture de frein selon la revendication 13, dans laquelle cette couche de revêtement (138) est formée par projection à la flamme d'une matière céramique contenant, comme adjuvant de frittage, 3 à 12% en poids d'oxyde d'yttrium, 3 à 20% en poids d'oxyde de calcium ou 3 à 20% en poids d'oxyde de magnésium, les pourcentages en poids étant rapportés au poids du zirconium.

15. Garniture de frein selon une quelconque des revendications 13 et 14, dans laquelle cette couche de revêtement (138) est formée par projection à la flamme d'une matière céramique à base d'oxyde de zirconium qui contient 2 à 3% en poids de dioxyde de titane, rapporté au poids des autres constituants de ladite matière céramique.

16. Garniture de frein selon une quelconque des revendications 13 à 15, dans laquelle cette couche de revêtement (138) est imprégnée d'au moins une matière résistante à la chaleur choisie parmi les vernis d'époxy et de silicone et un verre soluble.

# Fig.1

# Fig.2

Fig.3

130

132
132
136
134
138

Fig.4

100

102
114
110
112
138
142
134
114
110
112
104
136
140
120
134
140
142
118
138
118
136
118
106

2

Fig.5

Fig.6

## Fig.7

<u>100</u>

## Fig.8

<u>100</u>

## Fig.9

170

132

132

136

134

138

142

## Fig.10

180

132

132

136

134

138

142

## Fig.11

180

138    142    142

136

134

## Fig.12

100

## Fig.14

## Fig.13

6